# EUROPEAN PATENT SPECIFICATION

(11) **EP 4 237 955 B1**
(45) Date of publication and mention of the grant of the patent: **09.07.2025**
(21) Application number: 21790705.4
(22) Date of filing: 15.09.2021
(51) Int. Cl.: G06F 13/40, G06F 13/42

(54) **TUNNELING OVER UNIVERSAL SERIAL BUS (USB) SIDEBAND CHANNEL**
TUNNELN ÜBER EINEN USB-SEITENBANDKANAL
CANAL DE BANDE LATÉRALE DE TRANSMISSION TUNNEL SUR UN BUS SÉRIE UNIVERSEL (USB)

(30) Priority: 28.10.2020 US 202017082873
(43) Date of publication of application: 06.09.2023
(73) Proprietor: QUALCOMM INCORPORATED, San Diego, California 92121-1714 (US)
(72) Inventor: BENJAMINI, Yiftach, San Diego, California 92121 (US); AMARILIO, Lior, San Diego, California 92121 (US); GRAIF, Sharon, San Diego, California 92121 (US)
(74) Representative: Pritzlaff, Stefanie Lydia
(86) International application number: PCT/US2021/050544
(87) International publication number: WO 2022/093418

(56) References cited:
- WO-A1-2017/074635
- US-A1- 2015 370 299
- US-A1- 2018 337 863
- GAYATHRI VASUDEVAN: "Designing USB 3.1 Type-C Cables Using EZ-PD ™ CCG2", 3 April 2015 (2015-04-03), pages 1 - 22, XP055287909, Retrieved from the Internet <URL:http://www.cypress.com/file/151566/download> [retrieved on 20160712]

## Description

### PRIORITY APPLICATION

The present application claims priority to U.S. Patent Application Serial No. 17/082,873, filed October 28, 2020 and entitled "TUNNELING OVER UNIVERSAL SERIAL BUS (USB) SIDEBAND CHANNEL".

### BACKGROUND

### I. Field of the Disclosure

The technology of the disclosure relates generally to tunneling communication buses such as the Universal Serial Bus (USB).

### II. Background

Computing devices abound in modern society. At least part of the reason for the prevalence of computing devices is the myriad functions that they can provide. Such diverse functionality is frequently a result of niche circuitry incorporated into distinct integrated circuits (ICs) or devices. A number of different protocols have been developed to allow ICs or devices to communicate with one another. In many cases the protocols are specialized for the particular purpose resulting in plural communication links within the computing device including mobile computing devices such as smart phones and tablets. Recently, Universal Serial Bus (USB) 4.0 has been announced, which contemplates tunneling other protocols within the USB communication link. It is anticipated that USB 4.0 will readily accommodate most high-speed protocols using the primary transmit/receive differential pairs while providing a designated sideband link as well. While USB 4.0 designates the sideband link, there is room for improvement when using the sideband link for specific low-speed communication protocols.
Attention is drawn to US 215/370299A1 relating to tunneling in USB power delivery. An electronic system includes a computer and a power adapter. The computer includes an embedded controller (EC) coupled to a computer power delivery (PD) controller. The power adapter includes a power adapter PD controller connected to a slave device and is configured to communicate with the computer over a communication link. The computer PD controller is configured to receive a command from the EC and, to transmit a universal serial bus (USB) vendor defined message (VDM) header and one or more vendor defined objects (VDOs) including the information of the payload of the transmit command. The power adapter PD controller responds to the one or more VDOs either by changing an output signal to the slave device connected to the power adapter PD controller, reports a state of a general purpose input/output (GPIO) pin of the power adapter PD controller, or changes the state of the GPIO pin.
Further attention is drawn to WO 2017/074635 A1, relating to communications over a USB Type-C cable. A link control circuit is provided in a USB host to enable one or more communication circuits in the USB host to transmit and receive protocol-specific data over a sideband use, SBU, interface according to communication protocols that may or may not be USB compliant. In another aspect, the link control circuit is provided in a USB client to enable one or more communication circuits in the USB client to transmit and receive protocol-specific data over the SBU interface according to communication protocols that may or may not be USB compliant.

### SUMMARY OF THE DISCLOSURE

The invention is defined by the appended independent claims. Further embodiments are defined by the appended dependent claims. Aspects disclosed in the detailed description include tunneling over Universal Serial Bus (USB) sideband channel systems and methods. In particular, exemplary aspects of the present disclosure provide a way to tunnel I2C transactions between a master and slaves over USB 4.0 sideband channels. More particularly, a slave address table lookup (SATL) circuit is added to a host circuit. Signals from an I2C bus are received at the host, and any address associated with a destination is translated by the SATL. The translated address is passed to a low-speed interface associated with a sideband channel in the host circuit. Signals received at the low-speed interface are likewise reverse translated in the SATL. and then sent out through the I2C bus. Delays while I2C signals are propagating through a tunneling protocol may be accommodated by issuing a stretch command to a device expecting a response. In this fashion, low-speed I2C signals may be routed over the sideband channel through the low-speed sideband interface portion of the USB interface. Such routing permits the high-speed interface portion of the USB interface to remain dormant (e.g., potentially in a low-power mode) and prevents the need for additional pins and conductors to convey I2C signals to remote circuits.

### BRIEF DESCRIPTION OF THE FIGURES

Figure 1A is a stylized computing device coupled to a remote peripheral through a Universal Serial Bus (USB) communication link;
Figure 1B is a stylized mobile computing device coupled to a remote peripheral through a USB communication link;
Figure 2 is a block diagram of integrated circuits (ICs) within the computing device of Figure 1A or 1B communicating over USB communication links;
Figure 3 is a diagram of a pin layout in a USB Type-C connector;
Figure 4 is a block diagram of two ICs communicating over a USB communication link with low-speed links visually separated from high-speed links;
Figure 5 is a block diagram of an I2C bus coupled to a host IC and other I2C devices coupled to the host IC through a USB link;
Figure 6 is a block diagram of the host IC from Figure 5;
Figure 7A is a block diagram of a slave IC from Figure 5;
Figure 7B is a block diagram of a pass-through slave such as a retinier chip that may be used on a USB link;
Figure 7C is a block diagram of a series of cascaded slaves on a USB link that may use aspects of the sideband tunneling;
Figure 8A is a table of commands that may be used on a sideband channel to support I2C signaling thereover;
Figure 8B is a breakdown of commands that may be embedded in a register from the table of Figure 8A;
Figure 9A is a timeline of an I2C write command being sent on a sideband channel;
Figure 9B is a signal flow diagram reflecting the timeline of Figure 9A;
Figure 10A is a timeline of an I2C read command being sent on a sideband channel;
Figure 10B is a signal flow diagram reflecting the timeline of Figure 10A;
Figure 11 is a flowchart illustrating an exemplary process for sending I2C signals over a sideband channel from a host;
Figure 12 is a block diagram of an exemplary processor-based system that can include a USB system such as that illustrated; and
Figure 13 is a block diagram of a transceiver architecture that may be used in the processor-based system of Figure 12.

### DETAILED DESCRIPTION

With reference now to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

Aspects disclosed in the detailed description include tunneling over Universal Serial Bus (USB) sideband channel systems and methods. In particular, exemplary aspects of the present disclosure provide a way to tunnel I2C transactions between a master and slaves over USB 4.0 sideband channels. More particularly, a slave address table lookup (SATL) circuit is added to a host circuit. Signals from an I2C bus are received at the host, and any address associated with a destination is translated by the SATL. The translated address is passed to a low-speed interface associated with a sideband channel in the host circuit. Signals received at the low-speed interface are likewise reverse translated in the SATL and then sent out through the I2C bus. Delays while I2C signals are propagating through a tunneling protocol may be accommodated by issuing a stretch command to a device expecting a response. In this fashion, low-speed I2C signals may be routed over the sideband channel through the low-speed sideband interface portion of the USB interface. Such routing permits the high-speed interface portion of the USB interface to remain dormant (e.g., potentially in a low-power mode) and prevents the need for additional pins and conductors to convey I2C signals to remote circuits.

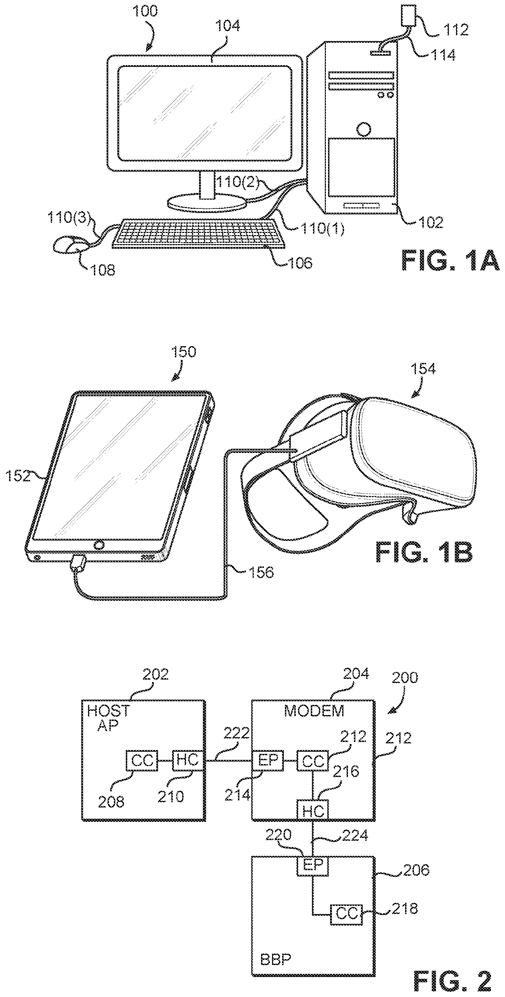

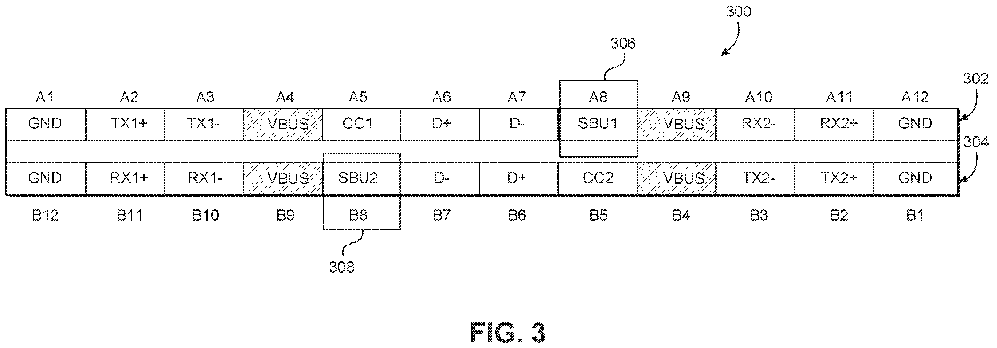

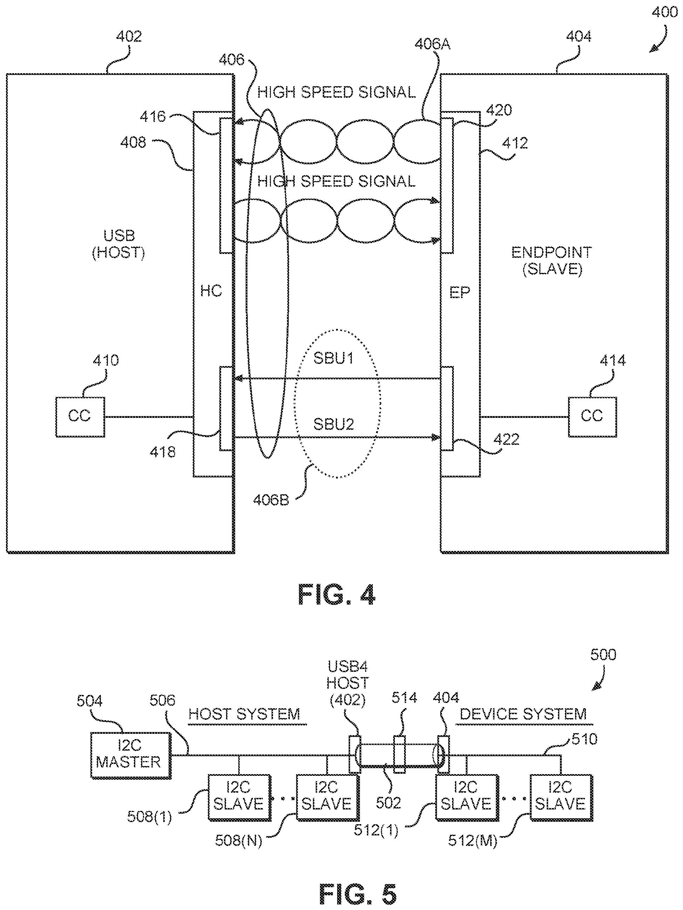

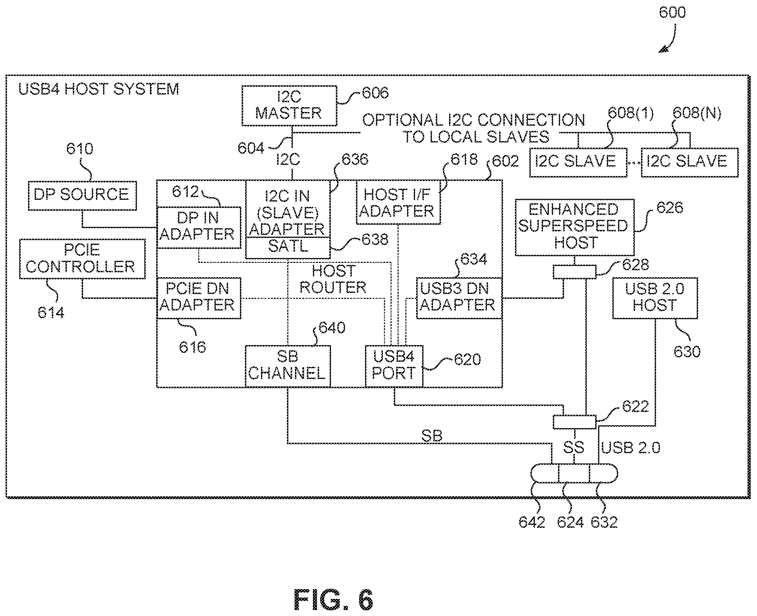

Before addressing specific examples of using a USB sideband link to send I2C signals through a USB link according to the present disclosure, a brief overview of possible environments in which a USB communication link may exist is provided with reference to Figures 1A, 1B, and 2, while a USB Type-C connector is illustrated in Figure 3. A discussion of the actual sideband channel begins below with reference to Figure 4, while the intersection of a USB connection and an I2C bus is discussed with reference to Figure 5. Exemplary aspects of sending an I2C signal over a USB sideband channel begins below with reference to Figure 6.

In this regard, Figure 1A illustrates a computing system 100. The computing system 100 may include a main computer housing 102 that contains a processor (not shown) and is coupled to a monitor 104, a keyboard 106, and a mouse 108 through cables 110(1)-110(3). While not shown, other user interface elements may also be present and coupled to the main computer housing 102 through a cable. One or more of the cables 110(1)-110(3) may be a USB Type-C cable. Further, the main computer housing 102 may be coupled to another computing device 112 such as a tablet through a USB Type-C cable 114. While not illustrated, the computing device 112 may be a peripheral such as a virtual reality headset.

Figure 1B illustrates a computing system 150 that may be a mobile computing device 152 such as a mobile phone or tablet that contains a processor (not shown) and is coupled to a virtual reality headset 154 through a cable 156, which may be a USB Type-C cable.

While USB is commonly thought of as an external connection requiring manual manipulation (e.g., insertion or extraction) of a connector into a receptacle, USB 4.0 is being adopted in chip-to-chip communication. In this regard, Figure 2 illustrates a computing system 200 (perhaps positioned within the main computer housing 102) that may include a first integrated circuit (IC) 202, which may be an application processor (AP) or the like, a second IC 204, which may be a modem or the like, and a third IC 206, which may be a baseband processor (BBP) or the like. The first IC 202 may include a control circuit 208 and a host circuit 210. The second IC 204 may include a control circuit 212, an endpoint circuit 214, and a host circuit 216. The third IC 206 may include a control circuit 218 and an endpoint circuit 220. The host circuit 210 may be coupled to the endpoint circuit 214 through a first USB communication link 222, and the host circuit 216 may be coupled to the endpoint circuit 220 through a second USB communication link 224. It should be appreciated that the second IC 204 may be a slave relative to the first IC 202, but may be a host relative to the third IC 206. As these are IC level connections, there may be no connector or receptacle, but the pins and lines within the respective circuits are dictated by the USB Type-C standard, and the bus interfaces (not shown) may omit the receptacle/connector portion that is common on external USB connections. It should be noted that in both internal and external implementations, USB links are generally shorter than two meters (2 m). As better explained below in Figure 5, if the USB links are greater than 2 m, a retimer chip may be used to boost signals on the USB link.

Figure 3 illustrates a standard USB Type-C connector 300 having a top row 302 and a bottom row 304, which are inverted mirror images of each other to allow insertion in either direction. The pin layout is summarized in Table 1 below.

**Table 1: USB Type-C connector pinouts**

| Pin | Name | Description |
|---|---|---|
| A1 | GND | Ground return |
| A2 | TX1+ | SS differential pair #1 TX positive |
| A3 | TX1- | SS differential pair #1 TX negative |
| A4 | VBUS | Bus power |
| A5 | CC1 | Configuration channel |
| A6 | D+ | USB 2.0 differential pair, positive |
| A7 | D- | USB 2.0 differential pair, negative |
| A8 | SBU1 | Sideband use |
| A9 | VBUS | Bus power |
| A10 | RX2- | SS differential pair #2, RX negative |
| A11 | RX2+ | SS differential pair #2, RX positive |
| A12 | GND | Ground return |
| B12 | GND | Ground return |
| B11 | RX1+ | SS differential pair #1, RX positive |
| B10 | RX1- | SS differential pair #1, RX negative |
| B9 | VBUS | Bus power |
| B8 | SBU2 | Sideband use |
| B7 | D- | USB differential pair, negative |
| B6 | D+ | USB differential pair, positive |
| B5 | CC2 | Configuration channel |
| B4 | VBUS | Bus power |
| B3 | TX2- | SS differential pair #2, TX negative |
| B2 | TX2+ | SS differential pair #2, TX positive |
| B 1 | GND | Ground return |

Even where there is not an explicit connector or receptacle, a USB connection such as the USB communication links 222, 224 will have pins and links corresponding to the pins of Table 1. SBU pins 306 and 308 are designated by the USB standard as sideband use pins. Sideband signals are considered low-speed (e.g., approximately one megabit per second (1020 kHz ~ 1 Mbs) or less) signals and may be used for an alternate mode under the USB standard. Accordingly, for the purposes of the present disclosure, low-speed is defined to be signals of less than 1.5 Mbs. The SBU pins 306 and 308 will be used by exemplary aspects of the present disclosure to send a low-speed protocol such as I2C through the USB link without using a high-speed portion of the link. In general, the sideband use will be low frequency, at least relative to the super-speed, high-speed, or full-speed contemplated on the primary data lines (e.g., D+, D-, TX1, TX2, RX1, RX2). The USB 4.0 specification contemplates using the sideband channel in a default Universal Asynchronous Receiver/Transmitter (UART) mode.

Figure 4 illustrates a USB subsystem 400 having a host IC 402 and a slave or endpoint IC 404 coupled by a USB communication link 406. The USB communication link 406 may be considered a multichannel bus that includes a high-speed link 406A and a low-speed link 406B, which may be the SBU link. The host IC 402 includes a host circuit 408 as well as a host control circuit 410. Similarly, the endpoint IC 404 includes an endpoint circuit 412 and an endpoint control circuit 414. It should be appreciated that the host circuit 408 may be or has a high-speed bus interface 416 that is configured to couple to high-speed lanes of the high-speed link 406A and a low-speed interface 418 that is configured to couple to the low-speed lanes of the low-speed link 406B. Similarly the endpoint circuit 412 may be or has a high-speed bus interface 420 that is configured to couple to the high-speed lanes of the high-speed link 406A and a low-speed interface 422 that is configured to couple to the low-speed lanes of the low-speed link 406B.

By way of additional explanation, an overview of an I2C system 500 that may include a USB link 502 is provided with reference to Figure 5. Specifically, the 12C system 500 may include an I2C master IC 504 that couples to a host I2C bus 506. One or more host I2C slaves 508(1)-508(N) also couple to the I2C bus 506. The host I2C bus 506 may couple to the host IC 402, which in turn couples to the USB link 502. The USB link 502 may couple to the endpoint IC 404, which in turn couples to endpoint or device I2C bus 510. Additional device I2C slaves 512(1)-512(M) may be coupled to the device I2C bus 510. In some implementations, where the USB link 502 exceeds about 2 m, the USB link 502 may include a retimer IC 514, which is designed to boost the signals on the USB link 502.

In the absence of the present disclosure, there are areas of the I2C system 500 which create at least two implementation concerns for designers. In particular, as a first concern, in the absence of the present disclosure, I2C signals from the I2C master IC 504 to any one of the device I2C slaves 512(1)-512(M) are tunneled through the USB link 502 on a high-speed link (e.g., through the superspeed channel). Given the general disparity between the high-speed lines and the low-speed requirements of I2C, such tunneling is inefficient. Further, such usage may require the high-speed line to remain active for longer periods of time, resulting in unwanted power consumption. Even if the D+/D- lines of the USB link 502 are used, there may be a conversion layer inside the host IC 402 as well as additional software and hardware on the device side to use the D+/D-lines of the USB link 502. This situation leads to higher latency for I2C access and may require a specialized USB driver. As a second concern, control for any intermediate chips, such as the retimer IC 514, is generally through I2C signaling. Currently, there is no way to extract the I2C signals from the USB link 502 at the retimer IC 514 to provide such signaling without having a full endpoint circuit (and another host circuit) within the chip. Again, in the absence of the present disclosure, the solution to this signaling requirement that avoids the additional endpoint/host circuity in the chip is to provide additional general purpose input/output (GPIO) pins at the host and at the retimer IC 514 along with additional conductive lines to couple these additional GPIO pins. Each pin comes with an additional cost both in terms of material and space. At a time when space and cost are prominent constraints, the addition of such additional GPIO pins is impractical.

Accordingly, exemplary aspects of the present disclosure provide a way to send I2C signals through sideband channels and particularly over the SBU links associated with SBU pins 306, 308. In particular, exemplary aspects of the present disclosure allow for I2C signals to be sent through a tunneling protocol over the SBU links. In this fashion, both concerns raised above are handled. Specifically, the low-speed links associated with the SBU channel are controlled independently of the high-speed links. Thus, traffic on the SBU links will not impact the low-power modes of the high-speed links resulting in net power savings. Further, the retimer IC 514 or comparable chip may be configured to receive and process signals on the SBU link without having to process the entirety of the signals on the high-speed links. This arrangement helps avoid the need for the additional GPIO pins and thus avoid the extra expense those pins entail and preserves space within a given chip to use for other purposes.

To provide the ability to send I2C messages over the SBU link, exemplary aspects of the present disclosure modify the host IC as set forth in Figure 6. Specifically, a host system 600 may include a host IC 602 that couples to an I2C bus 604. An I2C master IC 606 is also coupled to the I2C bus 604. Optional I2C slaves 608(1)-608(N) may also be coupled to the I2C bus 604. The host IC 602 may receive additional inputs from a display (e.g., DISPLAYPORT) source 610 at a display interface 612 and a Peripheral Component Interconnect (PCI) Express (PCIE) source 614 at a PCIE interface 616. The host IC 602 may further include a host interface (I/F) adapter or interface 618. High-speed signals such as DISPLAYPORT, PCIE, and the like are provided to a USB 4.0 port 620, where they may be multiplexed by a bi-directional multiplexer 622 before being passed to the USB link through a USB high-speed interface 624. The multiplexer 622 may also receive messages from an enhanced superspeed host IC 626 through a second bi-directional multiplexer 628. A USB 2.0 host 630 may provide messages to a USB 2.0 interface 632. The second multiplexer 628 may further handle messages from a USB 3.0 adapter 634 in the host IC 602.

The present disclosure provides an I2C interface or adapter 636, which is configured to couple to the I2C bus 604 and act as a slave (relative to the I2C master IC 606). The adapter 636 further includes a slave address table list (SATL) 638 (i.e., a translation circuit) holding information about registers in slaves that lie on the other side of a USB link for "outgoing" messages and information about registers in the I2C master IC 606 or I2C slaves 608(1)-608(N) for "incoming" messages. Messages received from the I2C bus 604 are processed by the adapter 636 using the SATL 638 and sent to a sideband channel interface 640. The sideband channel interface 640 routes messages to a sideband interface 642.

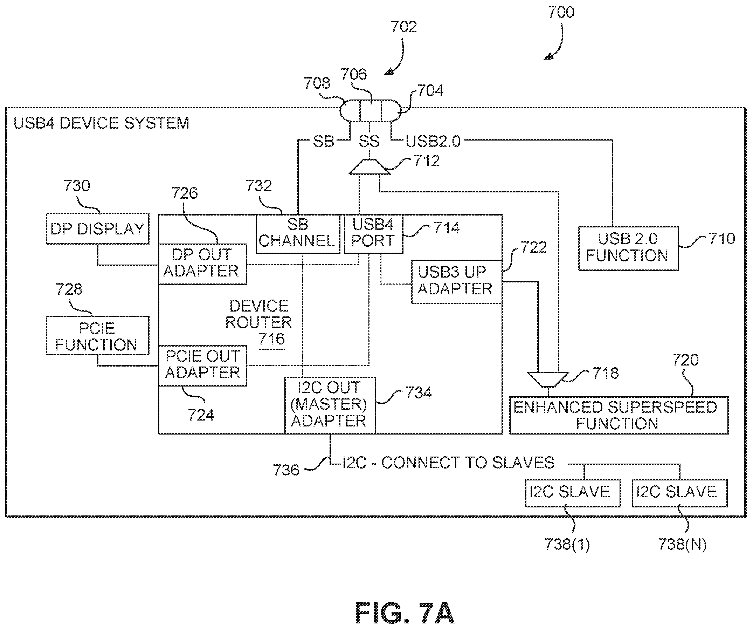

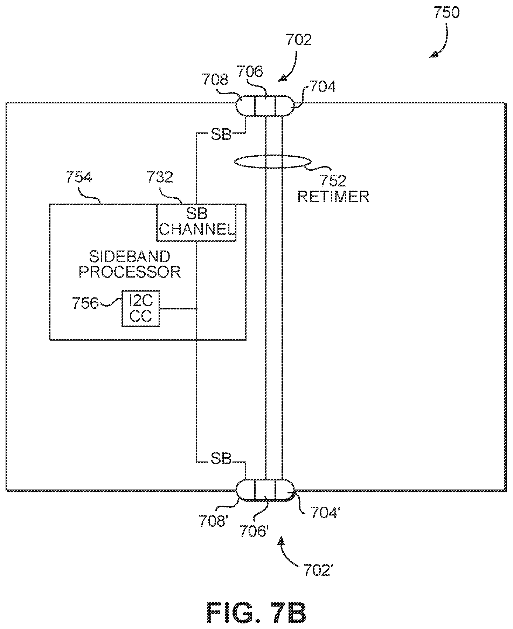

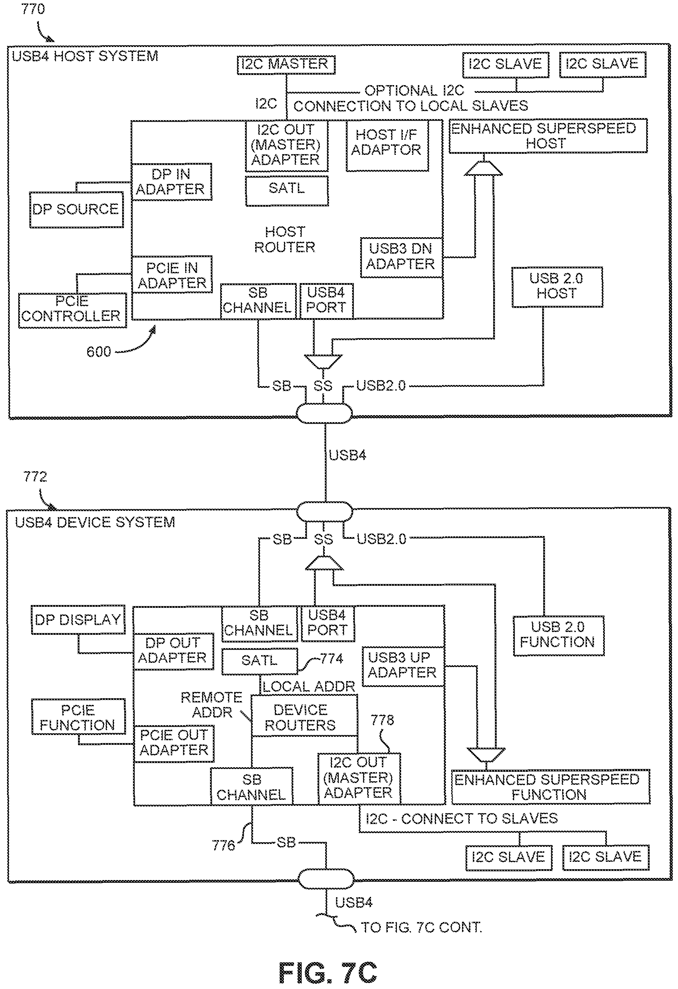

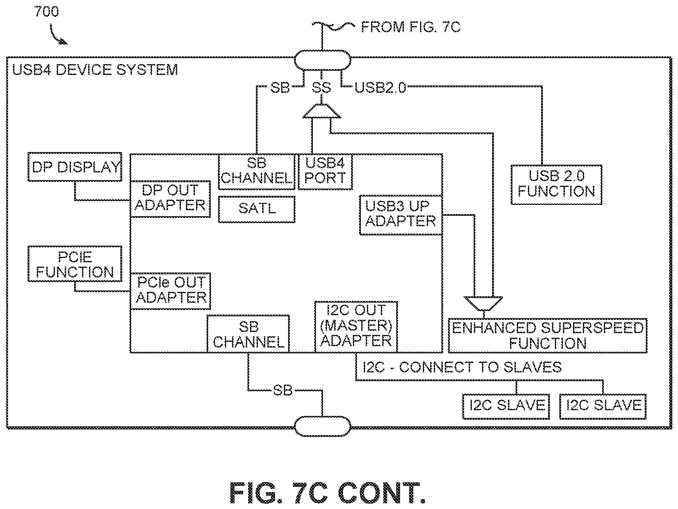

On the other end of the USB link a device 700 as illustrated in Figure 7A may be provided. Alternatively, a pass-through device like a retimer IC 750 as illustrated in Figure 7B may be provided. Still further, there may be cascaded devices in a system 770 such as illustrated in Figure 7C. The device 700 includes a USB interface 702 configured to be coupled to the USB link and containing a USB 2.0 interface 704, a high-speed interface 706 (which may have a superspeed interface, a full-speed interface, and a USB high-speed interface), and a sideband interface 708. The USB 2.0 interface 704 is coupled to a USB 2.0 function IC 710. The high-speed interface 706 may be provided to a multiplexer 712 that routes signals to a USB port 714 in a device router 716 or to a second multiplexer 718 associated with an enhanced superspeed function IC 720. The second multiplexer 718 may also be coupled to a USB 3.0 adapter 722 in the device router 716. The USB port 714 may be coupled to the USB 3.0 adapter 722, a PCIE out adapter 724, and a display out adapter 726. The PCIE out adapter 724 may be coupled to a PCIE function IC 728, and the display out adapter 726 may be coupled to a display IC 730 (e.g., a DISPLAYPORT IC).

With continued reference to Figure 7A, the sideband interface 708 is coupled to a sideband channel input 732 of the device router 716. The sideband channel input 732 is coupled to an I2C out adapter 734. The I2C out adapter 734 acts as a master for an I2C bus 736, which is coupled to device slaves 738(1)-738(M). While not shown, a second SATL may be present in the device router 716 at the 12C out adapter 734 or the sideband channel input 732 to handle messages intended for the I2C master IC 606 or I2C slaves 608(1)-608(N) of Figure 6. Sideband messages arriving at the sideband interface 708 are provided to the sideband channel input 732 and processed to ascertain a destination. For messages intended for the device slaves 738(1)-738(M), the messages are passed to the I2C out adapter 734 to be sent out on the I2C bus 736.

As discussed above, there may be a retimer chip or retimer IC associated with a USB link where the USB link is greater than 2 m or there is some other reason to boost signals on the USB link (e.g., electromagnetic interference). Such a retimer IC is controlled by I2C messages that may be sent in the sideband channel of the USB link to avoid having to provide additional GPIO pins. However, the retimer IC does not need to process any of the high-speed signals and accordingly may pass such high-speed signals through the retimer IC 750, albeit amplifying the signals if desired. In this regard, a retinier IC 750 is illustrated in Figure 7B. The retimer IC 750 may include a USB interface 702 configured to be coupled to the USB link and containing a USB 2.0 interface 704, a high-speed interface 706, and a sideband interface 708. High-speed signals received at the USB 2.0 interface 704 and the high-speed interface 706 may have pass-through links 752 that couple the interfaces 704, 706 to a second USB interface 702' that may contain a USB 2.0 interface 704' and a high-speed interface 706'. While not shown, amplifier(s) may be associated with the pass-through links 752 to boost the high-speed signals.

The sideband interface 708 may couple to a sideband processor 754 that receives sideband signals and extracts any I2C messages therein to be used by an I2C control circuit 756. Other sideband messages may be passed from the sideband processor 754 to a sideband interface 708' in the USB interface 702'. A sideband channel input 732 may be present to assist in this process.

Note that there may be systems where there are multiple cascaded devices on a single sideband chain. For example, such cascaded devices may be retimer chips. Such a system 770 is shown in Figure 7C where a host system 600 is coupled to a device 772, which in turn is coupled to a second device 700. Note that there may be more intermediate devices 772 (not shown). Device 772 is substantially similar to device 700, but uses its SATL 774 to determine if signals or messages should be placed on a downstream sideband link 776 or passed to an I2C out interface 778.

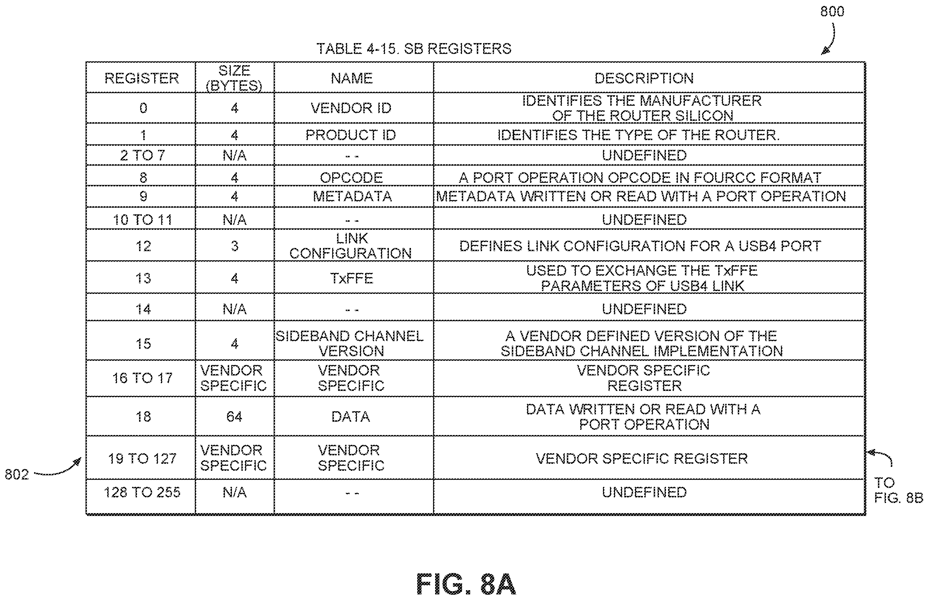

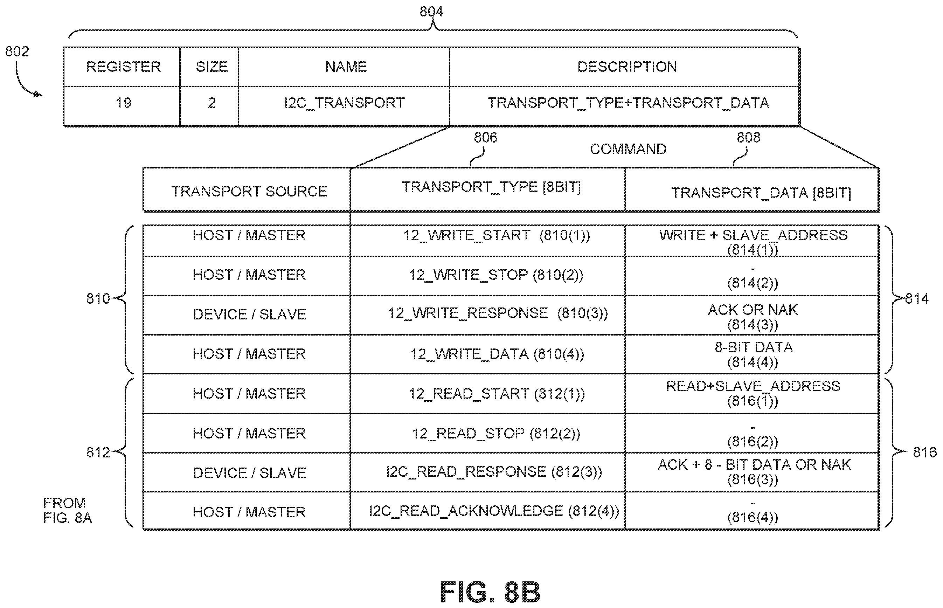

Regardless of the specific system arrangement, there still must be a way to indicate to the destination that the signal includes an I2C command and address. The USB 4.0 specification relies on reading from and writing to registers for sideband communication. In particular, Table 4-15 of the USB 4.0 specification, reproduced as table 800 in Figure 8A, identifies two hundred fifty-six (256) registers, but leaves many of these registers to "vendor specific" implementations. Exemplary aspects of the present disclosure take one of these registers 802 (e.g., register 19) and define a two-byte command 804 (e.g., I2C_transport) as better illustrated in Figure 8B. The first byte 806 defines a transport type (e.g., a command) and the second byte 808 defines transport data (if present). In an exemplary aspect, the possible commands in the first byte 806 include write commands 810 such as write_start 810(1), write_stop 810(2), write_response 810(3), and write_data 810(4) and read commands 812 such as read_start 812(1), read_stop 812(2), read_response 812(3), and read_acknowledge 812(4). The possible transport data in the second byte 808 may include write data 814 such as a write command and a slave address 814(1), a null field 814(2), an acknowledgment (ACK) or negative ACK (NACK) 814(3), or actual data 814(4) or read data 816 such as a read command and slave address 816(1), a null field 816(2), an ACK and data/NACK 816(3), or a null field 816(4). While these exemplary commands and arrangements provide the desired functionality, other arrangements may provide similar functionality and are within the scope of the present disclosure.

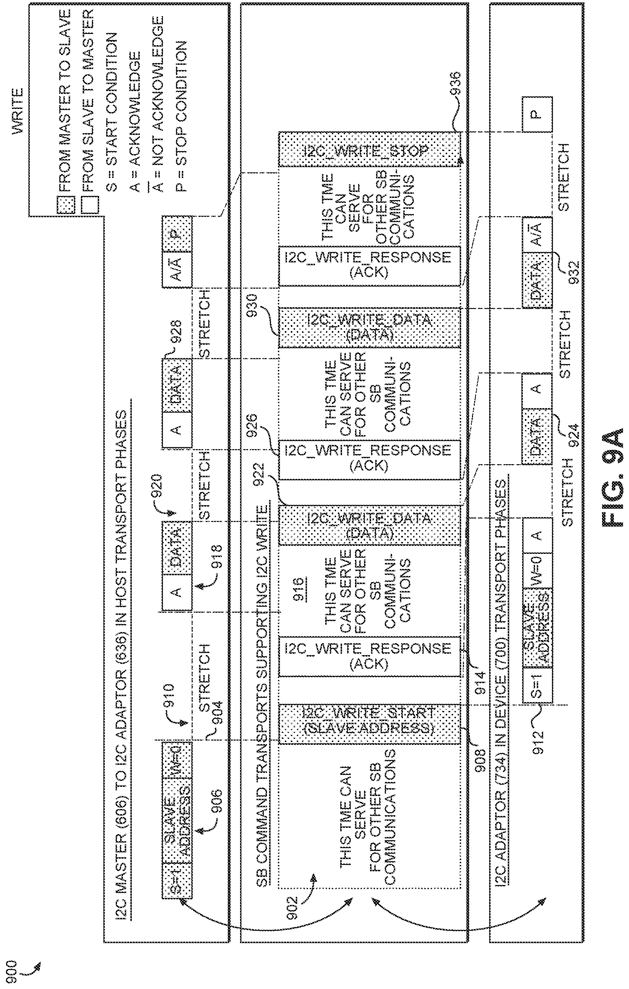

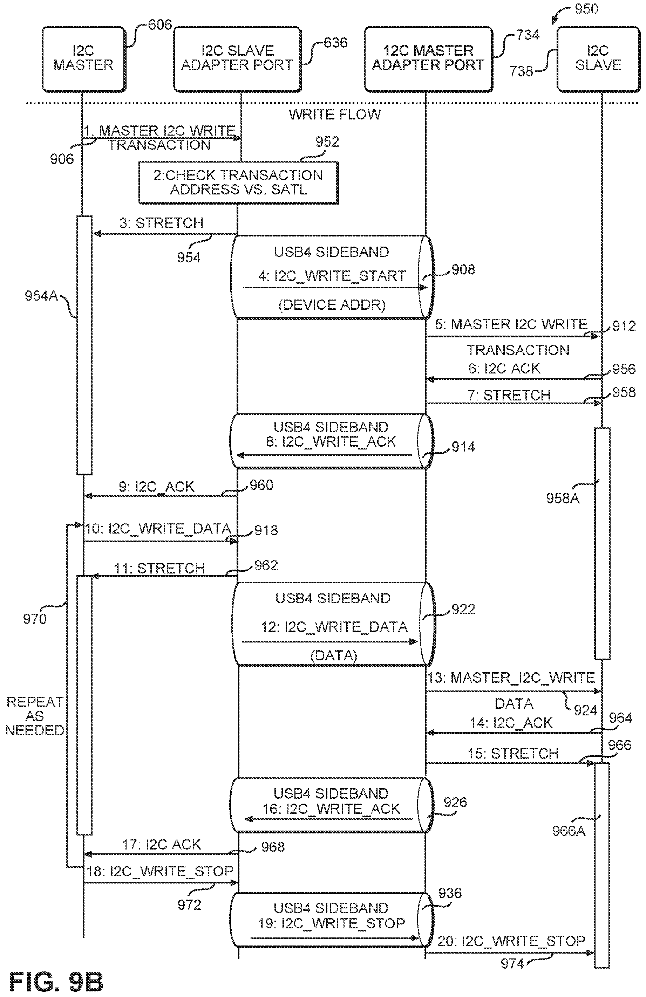

To further assist in understanding exemplary aspects of the present disclosure, Figures 9A and 9B illustrate a timeline 900 and signal flow diagram 950 of a write command from the I2C master IC 606 to a slave 738. Specifically, the timeline 900 begins while normal UART sideband signaling 902 is occurring. At time 904, the I2C master IC 606 generates a write command 906 using the I2C protocol (e.g., S=1 to show a start condition, the address, and a 0 bit to show that it is a write command). The write command 906 is sent from the I2C master IC 606 to the adapter 636. The adapter 636 uses the SATL 638 to generate a sideband write command 908 (e.g., using write_start 810(1)) with the appropriate slave address as indicated in the SATL 638. Meanwhile the 12C master IC 606 enters a stretch phase 910. The sideband write command 908 is sent over the USB link and received by the device 700 and specifically at the sideband channel input 732. The sideband write command 908 has the address extracted and generates an I2C write command 912 complying with the I2C protocol (e.g., S=1 to show a start condition, the slave address extracted from the sideband write command 908, and a 0 bit to show that it is a write command). The I2C write command 912 is sent over the I2C bus 736 to the addressed slave 738 and then enters a stretch. The device 700 sends a write response command 914 with an ACK. The sideband link may send normal UART signals during time 916 while the I2C master IC 606 sends data 918 before entering a stretch 920. On receipt of the data 918, the adapter 636 translates the data 918 using the SATL 638 and generates a write data command 922 that is sent to the device 700. The I2C out adapter 734 sends the data out as signal 924 and generates a write response ACK signal 926. The sideband link may return to normal UART signaling until the I2C master IC 606 sends additional data 928 (and enters a stretch). The additional data 928 is translated and sent out as a write_data command 930 by the adapter 636 to the device 700. The device 700 then sends the data 932 to the addressed slave 738 before generating a write_response command 934 with an ACK. When the last data has been written and acknowledged, the I2C master IC 606 may send a write_stop command 936, which stops the slave 738.

Figure 9B provides the signal flow diagram 950 corresponding to the timeline 900. The signal flow diagram 950 begins with the I2C master IC 606 issuing the write command 906 to the adapter 636. The adapter 636 uses the SATL 638 (block 952) and signals 954 to the I2C master IC 606 to enter a stretch 954A. The adapter 636 further generates the sideband write command 908 and sends the sideband write command 908 to the I2C out adapter 734 in the device 700. The sideband write command 908 has the address extracted and generates the I2C write command 912 complying with the 12C protocol. The I2C write command 912 is sent over the I2C bus 736 to the addressed slave 738 which responds with an ACK 956. The I2C out adapter 734 sends a stretch command 958 to cause the slave 738 to enter stretch 958A. Meanwhile, the I2C out adapter 734 sends the write response command 914 with an ACK. The adapter 636 sends an ACK 960 to the I2C master IC 606. The I2C master IC 606 then sends the data 918. The adapter 636 sends a stretch command 962 and generates the write data command 922 that is sent to the device 700. The I2C out adapter 734 sends the data out as the signal 924. The slave 738 generates an ACK 964. The I2C out adapter 734 commands 966 the slave 738 to enter a stretch 966A. Meanwhile, the I2C out adapter 734 generates the write response ACK signal 926. The adapter 636 sends an ACK 968 to the I2C master IC 606, which repeats the data steps as needed (generally 970) or the I2C master IC 606 may send a write_stop command 972, which causes the adapter 636 to send the write_stop command 936, which causes a stop command 974 to be sent to the slave 738.

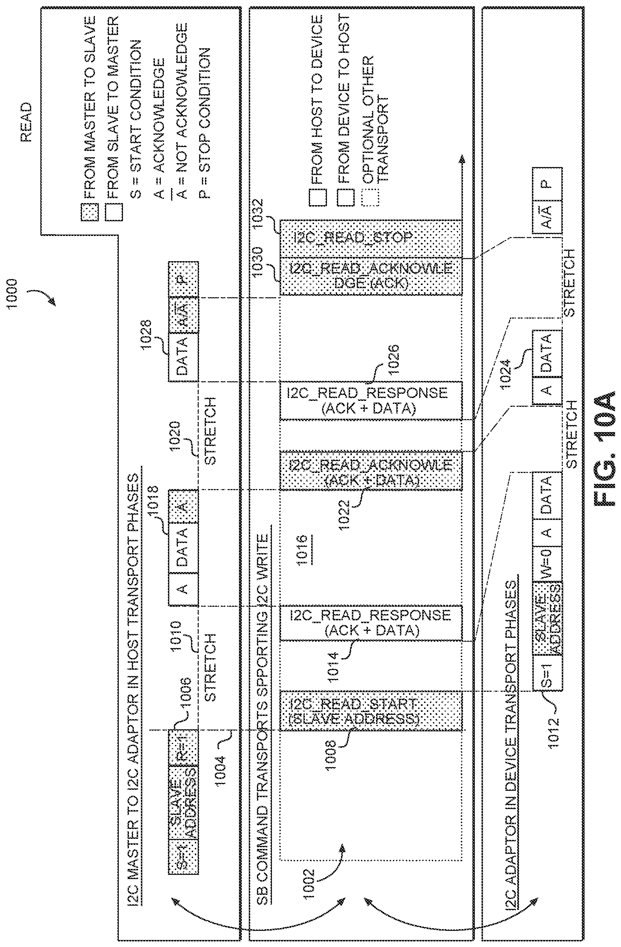

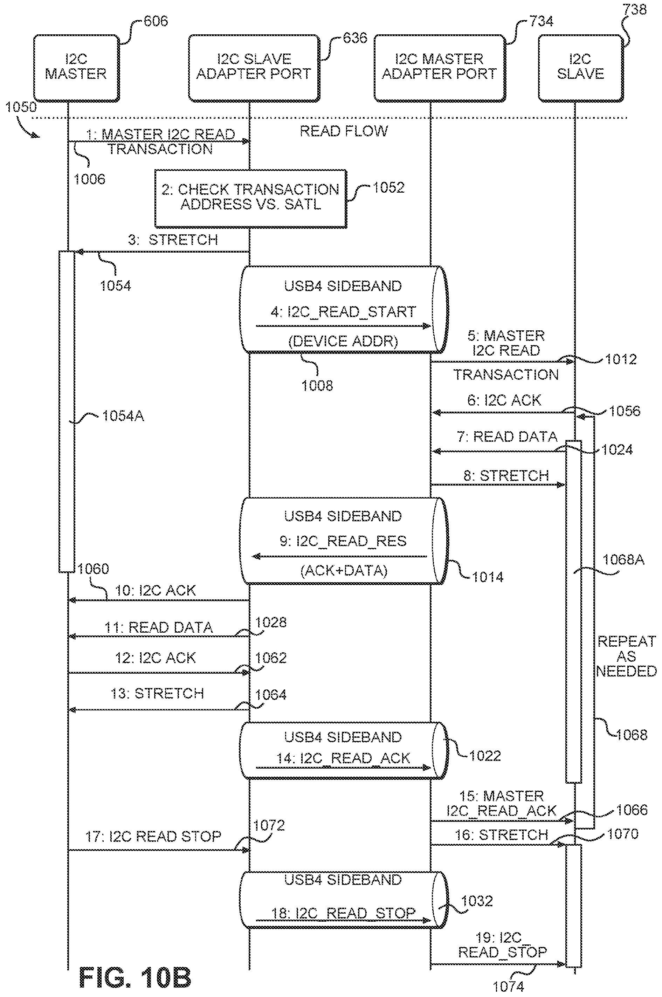

Read commands work similarly as illustrated in Figures 10A and 10B. Specifically, Figure 10A illustrates a timeline 1000 while Figure 10B illustrates a signal flow diagram 1050. Specifically, the timeline 1000 begins while normal UART sideband signaling 1002 is occurring. At time 1004, the I2C master IC 606 generates a read command 1006 using the I2C protocol (e.g., S=1 to show a start condition, the address, and a 1 bit to show that it is a read command). The read command 1006 is sent from the I2C master IC 606 to the adapter 636. The adapter 636 uses the SATL 638 to generate a sideband read command 1008 (e.g., using read_start 812(1)) with the appropriate slave address as indicated in the SATL 638. Meanwhile the I2C master IC 606 enters a stretch phase 1010. The sideband read command 1008 is sent over the USB link and received by the device 700 and specifically at the sideband channel input 732. The sideband read command 1008 has the address extracted and generates an I2C read command 1012 complying with the I2C protocol (e.g., S=1 to show a start condition, the slave address extracted from the sideband read command 1008, and a 1 bit to show that it is a read command). The I2C read command 1012 is sent over the I2C bus 736 to the addressed slave 738 and then enters a stretch. The device 700 sends a read response command 1014 with an ACK and any data. The sideband link may send normal UART signals during time 1016 while the I2C master IC 606 receives data 1018 before entering a stretch 1020. On receipt of an ACK from the I2C master IC 606, the adapter 636 sends a read acknowledgment 1022 to the device 700. The I2C out adapter 734 prepares additional data 1024, and sends a further read response signal 1026. The additional data 1024 is provided to the I2C master IC 606 as a signal 1028 from the adapter 636, which responds with a further ACK, causing the adapter 636 to generate another read acknowledgment signal 1030 and a read stop command 1032.

Figure 10B provides the signal flow diagram 1050 corresponding to the timeline 1000. The signal flow diagram 1050 begins with the I2C master IC 606 issuing the read command 1006 to the adapter 636. The adapter 636 uses the SATL 638 (block 1052) and signals 1054 to the I2C master IC 606 to enter a stretch 1054A. The adapter 636 further generates the sideband read command 1008 and sends the sideband read command 908 to the I2C out adapter 734 in the device 700. The sideband read command 1008 has the address extracted and generates the I2C read command 1012 complying with the I2C protocol. The I2C read command 1012 is sent over the I2C bus 736 to the addressed slave 738 which responds with an ACK 1056. The slave 738 further sends the read data signal 1024. The I2C out adapter 734 sends a stretch command 1058 to cause the slave 738 to enter stretch 1058A. Meanwhile, the I2C out adapter 734 sends the read response command 1014 with an ACK. The adapter 636 sends an ACK 1060 to the I2C master IC 606. The I2C master IC 606 then receives the signal 1028 and sends an ACK 1062. The adapter 636 sends a stretch command 1064 and generates the read acknowledgment 1022 that is sent to the device 700. The I2C out adapter 734 sends an ACK 1066, which may repeat 1068 to send more data as needed. The I2C out adapter 734 sends a stretch command 1070 to the slave 738. When all the data is transferred, the I2C master IC 606 may send a read stop command 1072, which causes the adapter 636 to send the read stop command 1032. The I2C out adapter 734 then sends a stop command 1074 to the slave 738.

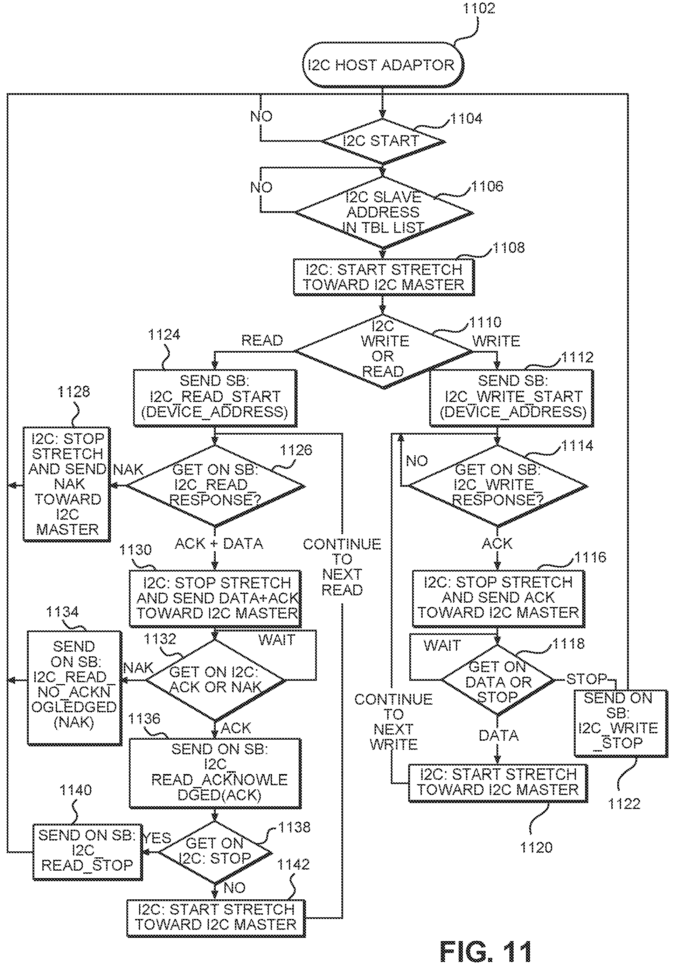

Figure 11 illustrates a process 1100 distilled from Figures 9A-10B for both read and write commands. The process 1100 begins on power up of the I2C host adapter 636 (block 1102). The host adapter 636 monitors for whether the I2C bus 604 has started (block 1104). While the answer to block 1104 is no, the process 1100 continues to monitor. Once the I2C bus 604 has started and a message is sent, the adapter 636 checks the address of the message to see if the address is in the SATL 638 (block 1106). If the address is not in the SATL 638, that means the message is for a slave 608(1)-608(N) and the present disclosure is not needed. If however, the address is in the SATL 638 indicating a slave 738(1)-738(M), then the adapter 636 sends a start stretch command to the I2C master IC 606 (block 1108) and determines if the command is a read or write command (block 1110).

With continued reference to Figure 11, and assuming that the command was a write command at block 1110, the adapter 636 sends an 12C_write_start command with the device address on the sideband link (block 1112). The adapter 636 then listens to see if an I2C_write_response has been received from the sideband link (block 1114). Once a response is received (e.g., an ACK), the adapter 636 stops the stretch and sends the ACK to the I2C master IC 606 (block 1116). The I2C master IC 606 sends data or a stop command (block 1118). If the I2C master IC 606 sends data, then the adapter 636 starts a stretch for the I2C master IC 606 and sends the data over the sideband link to be written to the slave (block 1120). If however, a stop is sent at block 1118, then the adapter 636 sends an I2C_write_stop command (block 1122).

With continued reference to Figure 11, and returning to block 1110, if a read command is received, the adapter 636 sends an I2C_read_start command with the device address over the sideband link (block 1124). The adapter 636 waits for a response (block 1126). If the response is a NACK, then the adapter 636 stops the stretch and sends the NACK to the I2C master IC 606 (block 1128) after which the process 1100 returns to block 1104. If the response is an ACK with data, the adapter 636 stops the stretch and sends the data with the ACK to the I2C master IC 606 (block 1130) and then monitors for a response (block 1132) of an ACK or NACK from the I2C master IC 606. If the answer is a NACK, then the adapter 636 sends the read not acknowledged over the sideband link (block 1134) and the process 1100 returns to block 1104. If however, the answer at block 1132 is an ACK, then the adapter 636 sends an I2C_read_acknowledged command (block 1136). The adapter 636 then monitors for a stop from the I2C master IC 606 (block 1138). If a stop is received, then the adapter 636 sends an I2C_read_stop command (block 1140), and the process 1100 returns to block 1104. If however, no stop is received, the adapter 636 starts a stretch toward the I2C master IC 606 (block 1142) and returns to block 1126.

The tunneling over USB sideband channel systems and methods according to aspects disclosed herein may be provided in or integrated into any processor-based device. Examples, without limitation, include a set top box, an entertainment unit, a navigation device, a communications device, a fixed location data unit, a mobile location data unit, a global positioning system (GPS) device, a mobile phone, a cellular phone, a smart phone, a session initiation protocol (SIP) phone, a tablet, a phablet, a server, a computer, a portable computer, a mobile computing device, a wearable computing device (e.g., a smart watch, a health or fitness tracker, eyewear, etc.), a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, a portable digital video player, an automobile, a vehicle component, avionics systems, a drone, and a multicopter.

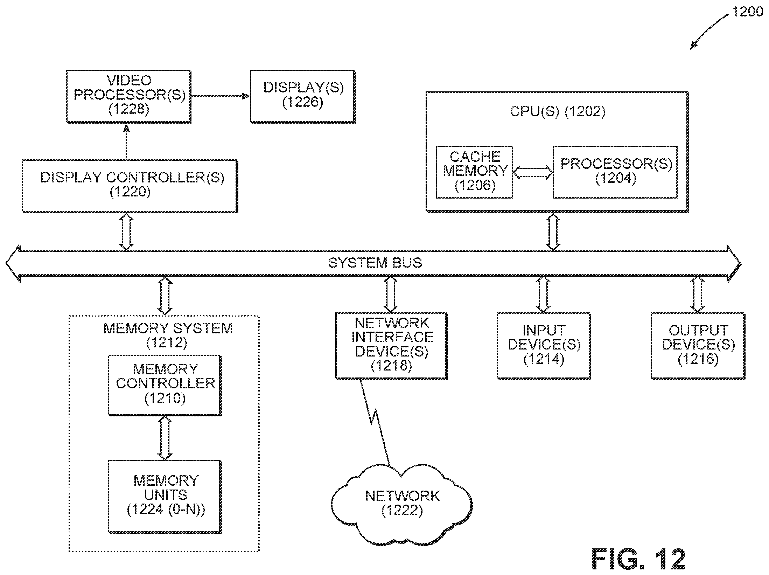

More generally, in this regard, Figure 12 illustrates an example of a processor-based system 1200 that can employ a USB subsystem such as that illustrated in Figure 4. In this example, the processor-based system 1200 includes one or more central processing units (CPUs) 1202, each including one or more processors 1204. The CPU(s) 1202 may have cache memory 1206 coupled to the processor(s) 1204 for rapid access to temporarily stored data. The CPU(s) 1202 is coupled to a system bus 1208 and can intercouple master and slave devices included in the processor-based system 1200. As is well known, the CPU(s) 1202 communicates with these other devices by exchanging address, control, and data information over the system bus 1208. For example, the CPU(s) 1202 can communicate bus transaction requests to a memory controller 1210 as an example of a slave device.

Other master and slave devices can be connected to the system bus 1208. As illustrated in Figure 12, these devices can include a memory system 1212, one or more input devices 1214, one or more output devices 1216, one or more network interface devices 1218, and one or more display controllers 1220, as examples. The input device(s) 1214 can include any type of input device, including, but not limited to, input keys, switches, voice processors, etc. The output device(s) 1216 can include any type of output device, including, but not limited to, audio, video, other visual indicators, etc. The network interface device(s) 1218 can be any devices configured to allow exchange of data to and from a network 1222. The network 1222 can be any type of network, including, but not limited to, a wired or wireless network, a private or public network, a local area network (LAN), a wireless local area network (WLAN), a wide area network (WAN), a BLUETOOTH^{™} network, and the Internet. The network interface device(s) 1218 can be configured to support any type of communications protocol desired. The memory system 1212 can include one or more memory units 1224(0-N). While illustrated as being connected to the system bus 1208, in an exemplary aspect, the CPU(s) 1202 are connected to the network interface device(s) 1218 through a USB bus as described herein.

The CPU(s) 1202 may also be configured to access the display controller(s) 1220 over the system bus 1208 to control information sent to one or more displays 1226. The display controller(s) 1220 sends information to the display(s) 1226 to be displayed via one or more video processors 1228, which process the information to be displayed into a format suitable for the display(s) 1226. The display(s) 1226 can include any type of display, including, but not limited to, a cathode ray tube (CRT), a liquid crystal display (LCD), a plasma display, a light emitting diode (LED) display, etc.

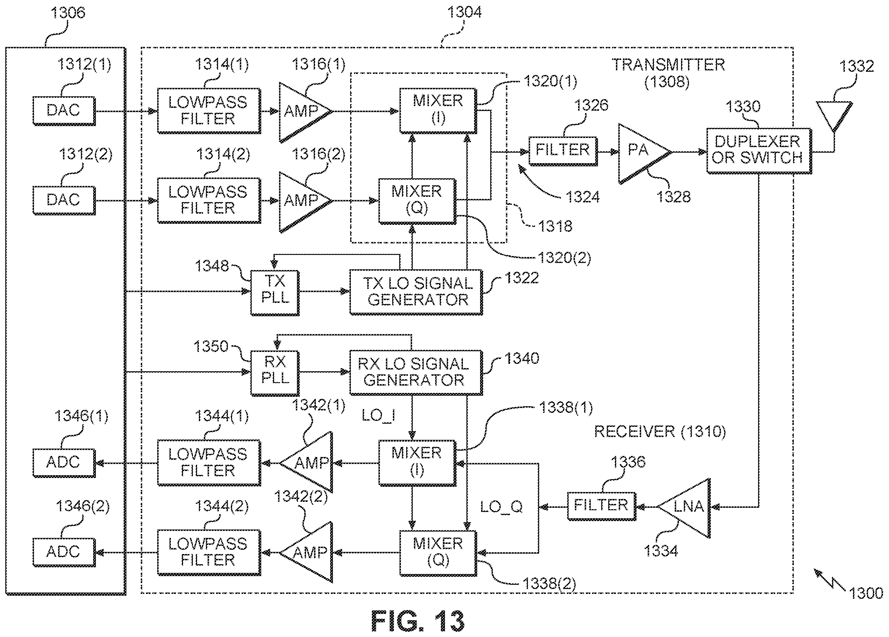

Figure 13 illustrates an example of a wireless communications device 1300 which can include a USB subsystem operating according to exemplary aspects of the present disclosure. The wireless communications device 1300 may include or be provided in any of the above-referenced devices, as examples. As shown in Figure 13, the wireless communications device 1300 includes a transceiver 1304 and a data processor 1308. The data processor 1308 may include a memory (not shown) to store data and program codes. The transceiver 1304 includes a transmitter 1310 and a receiver 1312 that support bi-directional communication. In general, the wireless communications device 1300 may include any number of transmitters and/or receivers for any number of communication systems and frequency bands. All or a portion of the transceiver 1304 may be implemented on one or more analog ICs, RF ICs (RFICs), mixed-signal ICs, etc.

A transmitter 1310 or a receiver 1312 may be implemented with a super-heterodyne architecture or a direct-conversion architecture. In the super-heterodyne architecture, a signal is frequency-converted between RF and baseband in multiple stages, e.g., from RF to an intermediate frequency (IF) in one stage, and then from IF to baseband in another stage. In the direct-conversion architecture, a signal is frequency converted between RF and baseband in one stage. The super-heterodyne and direct-conversion architectures may use different circuit blocks and/or have different requirements. In the wireless communications device 1300 in Figure 13, the transmitter 1310 and the receiver 1312 are implemented with the direct-conversion architecture.

In the transmit path, the data processor 1308 processes data to be transmitted and provides I and Q analog output signals to the transmitter 1310. In the exemplary wireless communications device 1300, the data processor 1308 includes digital-to-analog-converters (DACs) 1314(1) and 1314(2) for converting digital signals generated by the data processor 1308 into the I and Q analog output signals, e.g., I and Q output currents, for further processing.

Within the transmitter 1310, lowpass filters 1316(1), 1316(2) filter the I and Q analog output signals, respectively, to remove undesired images caused by the prior digital-to-analog conversion. Amplifiers (AMPs) 1318(1), 1318(2) amplify the signals from the lowpass filters 1316(1), 1316(2), respectively, and provide I and Q baseband signals. An upconverter 1320 upconverts the I and Q baseband signals with I and Q transmit (TX) local oscillator (LO) signals from a TX LO signal generator 1322 through mixers 1324(1), 1324(2) to provide an upconverted signal 1326. A filter 1328 filters the upconverted signal 1326 to remove undesired images caused by the frequency upconversion as well as noise in a receive frequency band. A power amplifier (PA) 1330 amplifies the upconverted signal 1326 from the filter 1328 to obtain the desired output power level and provides a transmit RF signal. The transmit RF signal is routed through a duplexer or switch 1332 and transmitted via an antenna 1334.

In the receive path, the antenna 1334 receives signals transmitted by base stations and provides a received RF signal, which is routed through the duplexer or switch 1332 and provided to a low noise amplifier (LNA) 1336. The duplexer or switch 1332 is designed to operate with a specific RX-to-TX duplexer frequency separation, such that RX signals are isolated from TX signals. The received RF signal is amplified by the LNA 1336 and filtered by a filter 1338 to obtain a desired RF input signal. Downconversion mixers 1340(1), 1340(2) mix an output of the filter 1338 with I and Q receive (RX) LO signals (i.e., LO_I and LO_Q) from an RX LO signal generator 1342 to generate I and Q baseband signals. The I and Q baseband signals are amplified by AMPs 1344(1), 1344(2) and further filtered by lowpass filters 1346(1), 1346(2) to obtain I and Q analog input signals, which are provided to the data processor 1308. In this example, the data processor 1308 includes analog-to-digital-converters (ADCs) 1348(1), 1348(2) for converting the analog input signals into digital signals to be further processed by the data processor 1308.

In the wireless communications device 1300 in Figure 13, the TX LO signal generator 1322 generates the I and Q TX LO signals used for frequency upconversion, while the RX LO signal generator 1342 generates the I and Q RX LO signals used for frequency downconversion. Each LO signal is a periodic signal with a particular fundamental frequency. A transmit (TX) phase-locked loop (PLL) circuit 1350 receives timing information from data processor 1308 and generates a control signal used to adjust the frequency and/or phase of the TX LO signals from the TX LO signal generator 1322. Similarly, a receive (RX) phase-locked loop (PLL) circuit 1352 receives timing information from the data processor 1308 and generates a control signal used to adjust the frequency and/or phase of the RX LO signals from the RX LO signal generator 1342.

Those of skill in the art will further appreciate that the various illustrative logical blocks, modules, circuits, and algorithms described in connection with the aspects disclosed herein may be implemented as electronic hardware, instructions stored in memory or in another computer readable medium and executed by a processor or other processing device, or combinations of both. The devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The aspects disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, a hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary aspects herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary aspects may be combined. It is to be understood that the operational steps illustrated in the flowchart diagrams may be subject to numerous different modifications as will be readily apparent to one of skill in the art. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

## Claims

1. An integrated circuit, IC, (402, 600) for tunneling I2C transactions between a master (504) and slaves (512), the IC comprising:
a first low-speed interface (636) configured to be coupled to a low-speed link (604), wherein the first low-speed interface comprises an I2C interface;
a translation circuit (638) associated with the first low-speed interface, the translation circuit comprising a slave address table lookup, SATL, circuit;
a second low-speed interface (418, 642) configured to be coupled to a sideband link in a multichannel bus (406), the sideband link comprising sideband use, SBU, pins of Universal Serial Bus, USB, standard, wherein the second low-speed interface comprises a sideband interface in a USB interface; and
a control circuit (410) configured to:
receive a first signal from the first low-speed interface from the master (504);
use the translation circuit to generate a command having an address embedded therein, wherein the address is an address of a slave (512) translated using the SATL; and
send the command through the second low-speed interface across the multichannel bus to a remote IC, the remote IC comprising the slave (512).

2. The IC of claim 1, further comprising a bus interface comprising the second low-speed interface and at least one of a superspeed interface, a full-speed interface, and a high-speed interface.

3. The IC of claim 1, wherein the control circuit is further configured to receive a second signal from the low-speed link through the second low-speed interface, wherein the control circuit is further configured to extract a second address from the second signal and send a third signal to a second remote IC through the first low-speed interface using the second address.

4. The IC of claim 1, wherein the first signal comprises a read command.

5. The IC of claim 1, wherein the first signal comprises a write command.

6. The IC of claim 1, wherein the control circuit is configured to send a stretch command through the first low-speed interface to cause the slave to enter a stretch to accommodate for delays.

7. The IC of claim 1, wherein the second low-speed interface comprises at least part of a USB Type-C connector.

8. An integrated circuit, IC, (404, 700) for tunneling I2C transactions between a master (504) and slaves (512), the IC comprising:
a first low-speed interface (734) configured to be coupled to a low-speed link (736), wherein the first low-speed interface comprises an I2C interface;
a translation circuit (774) associated with the first low-speed interface, the translation circuit comprising a slave address table lookup, SATL, circuit (774);
a second low-speed interface (422, 708) configured to be coupled to a sideband link in a multichannel bus (406) , the sideband link comprising sideband use, SBU, pins of Universal Serial Bus, USB, standard, wherein the second low-speed interface comprises a sideband interface within a USB interface; and
a control circuit (414) configured to:
receive a first signal comprising a command and an address from the second low-speed interface,
use the SATL (774) to determine if the command should be placed on a downstream link (776) or passed to the first low-speed interface (778);
and
send the command through the first low-speed interface to a remote IC, the remote IC comprising the slave (512) .

9. The IC of claim 8, further comprising a bus interface comprising the second low-speed interface and at least one of a superspeed interface, a full-speed interface, and a high-speed interface.

10. The IC of claim 8, wherein the control circuit is further configured to receive a second signal from the low-speed link through the second low-speed interface.

11. The IC of claim 8, wherein the first signal comprises a read command.

12. The IC of claim 8, wherein the first signal comprises a write command.

13. The IC of claim 8, wherein the control circuit is configured to send a stretch command through the first low-speed interface to cause the slave to enter a stretch to accommodate for delays.

14. The IC of any of claims 1-7 or 8-13 integrated into a device selected from the group consisting of: a set top box; an entertainment unit; a navigation device; a communications device; a fixed location data unit; a mobile location data unit; a global positioning system, GPS, device; a mobile phone; a cellular phone; a smart phone; a session initiation protocol, SIP, phone; a tablet; a phablet; a server; a computer; a portable computer; a mobile computing device; a wearable computing device; a desktop computer; a personal digital assistant, PDA; a monitor; a computer monitor; a television; a tuner; a radio; a satellite radio; a music player; a digital music player; a portable music player; a digital video player; a video player; a digital video disc, DVD, player; a portable digital video player; an automobile; a vehicle component; avionics systems; a drone; and a multicopter.

15. A method for communicating for tunneling I2C transactions between a master (504) and slaves (512), comprising:
receiving a first signal from a first low-speed interface from the master (504), wherein the first low-speed interface comprises an I2C interface;
using a translation circuit to generate a command having an address embedded therein, the translation circuit comprising a slave address table lookup, SATL, circuit, wherein the address is an address of a slave (512) translated using the SATL; and
sending the command through a second low-speed interface across a multichannel bus to a remote integrated circuit, IC, the remote IC comprising the slave (512),
wherein the second low-speed interface is coupled to a sideband link in the multichannel bus, the sideband link comprising sideband use, SBU, pins of a universal serial bus, USB, standard;
wherein the second low-speed interface comprises a sideband interface within a Universal Serial Bus, USB, interface.

## Patentansprüche

1. Ein integrierter Schaltkreis (IC) (402, 600) für das Tunneln von 12C-Transaktionen zwischen einem Master (504) und mehreren Slaves (512), wobei der IC aufweist:
eine erste Niedergeschwindigkeit-Schnittstelle (636), die konfiguriert ist, um mit einer Niedergeschwindigkeit-Verbindung (604) gekoppelt zu werden, wobei die erste Niedergeschwindigkeit-Schnittstelle eine 12C-Schnittstelle ist,
eine Übersetzungsschaltung (638), die mit der ersten Niedergeschwindigkeit-Schnittstelle assoziiert ist, wobei die Übersetzungsschaltung eine Slave-Adresse-Nachschlagetabelle (Slave Address Table Lookup bzw. SATL)-Schaltung aufweist,
eine zweite Niedergeschwindigkeit-Schnittstelle (418, 642), die konfiguriert ist, um mit einer Seitenbandverbindung in einem Mehrkanalbus (406) gekoppelt zu werden, wobei die Seitenbandverbindung Seitenbandverwendung (Sideband Use bzw. SBU)-Stifte eines USB (Universal Serial Bus)-Standards aufweist, wobei die zweite Niedergeschwindigkeit-Schnittstelle eine Seitenbandschnittstelle in einer USB-Schnittstelle ist, und
eine Steuerschaltung (410), die konfiguriert ist zum:
Empfangen eines ersten Signals von der ersten Niedergeschwindigkeit-Schnittstelle von dem Master (504),
Verwenden der Übersetzungsschaltung für das Generieren eines Befehls mit einer darin eingebetteten Adresse, wobei die Adresse eine unter Verwendung der SATL übersetzte Adresse eines Slaves (512) ist, und
Senden des Befehls über die zweite Niedergeschwindigkeit-Schnittstelle über den Mehrkanalbus zu einem fernen IC, wobei der ferne IC den Slave (512) aufweist.

2. IC nach Anspruch 1, der weiterhin eine Busschnittstelle aufweist, die die zweite Niedergeschwindigkeit-Schnittstelle und eine Supergeschwindigkeit-Schnittstelle, eine Vollgeschwindigkeit-Schnittstelle und/oder eine Hochgeschwindigkeit-Schnittstelle aufweist.

3. IC nach Anspruch 1, wobei die Steuerschaltung weiterhin konfiguriert ist zum Empfangen eines zweiten Signals von der Niedergeschwindigkeit-Verbindung über die zweite Niedergeschwindigkeit-Schnittstelle, wobei die Steuerschaltung weiterhin konfiguriert ist zum Extrahieren einer zweiten Adresse aus dem zweiten Signal und zum Senden eines dritten Signals an einen zweiten fernen IC über die erste Niedergeschwindigkeit-Schnittstelle unter Verwendung der zweiten Adresse.

4. IC nach Anspruch 1, wobei das erste Signal einen Lesebefehl aufweist.

5. IC nach Anspruch 1, wobei das erste Signal einen Schreibbefehl aufweist.

6. IC nach Anspruch 1, wobei die Steuerschaltung konfiguriert ist zum Senden eines Dehnbefehls über die erste Niedergeschwindigkeit-Schnittstelle für das Veranlassen des Slaves zum Eintreten in eine Dehnung für eine Unterstützung von Verzögerungen.

7. IC nach Anspruch 1, wobei die zweite Niedergeschwindigkeit-Schnittstelle wenigstens einen Teil eines USB Typ-C-Steckverbinders aufweist.

8. Ein integrierter Schaltkreis (IC) (404, 700) für das Tunneln von 12C-Transaktionen zwischen einem Master (504) und mehreren Slaves (512), wobei der IC aufweist:
eine erste Niedergeschwindigkeit-Schnittstelle (734), die konfiguriert ist, um mit einer Niedergeschwindigkeit-Verbindung (736) gekoppelt zu werden, wobei die erste Niedergeschwindigkeit-Schnittstelle eine 12C-Schnittstelle ist,
eine Übersetzungsschaltung (774), die mit der ersten Niedergeschwindigkeit-Schnittstelle assoziiert ist, wobei die Übersetzungsschaltung eine Slave-Adresse-Nachschlagetabelle (Slave Address Table Lookup bzw. SATL)-Schaltung (774) aufweist,
eine zweite Niedergeschwindigkeit-Schnittstelle (422, 708), die konfiguriert ist, um mit einer Seitenbandverbindung in einem Mehrkanalbus (406) gekoppelt zu werden, wobei die Seitenbandverbindung Seitenbandverwendung (Sideband Use bzw. SBU)-Stifte eines USB (Universal Serial Bus)-Standards aufweist, wobei die zweite Niedergeschwindigkeit-Schnittstelle eine Seitenbandschnittstelle in einer USB-Schnittstelle ist, und
eine Steuerschaltung (414), die konfiguriert ist zum:
Empfangen eines ersten Signals, das einen Befehl und eine Adresse aufweist, von der zweiten Niedergeschwindigkeit-Schnittstelle,
Verwenden der SATL (774) für das Bestimmen, ob der Befehl auf einer Abwärtsstrecke-Verbindung (776) platziert oder zu der ersten Niedergeschwindigkeit-Schnittstelle (778) weitergereicht werden soll, und
Senden des Befehls über die erste Niedergeschwindigkeit-Schnittstelle an einen fernen IC, wobei der ferne IC den Slave (512) aufweist.

9. IC nach Anspruch 8, der weiterhin eine Busschnittstelle aufweist, die die zweite Niedergeschwindigkeit-Schnittstelle und eine Supergeschwindigkeit-Schnittstelle, eine Vollgeschwindigkeit-Schnittstelle und/oder eine Hochgeschwindigkeit-Schnittstelle aufweist.

10. IC nach Anspruch 8, wobei die Steuerschaltung weiterhin konfiguriert ist zum Empfangen eines zweiten Signals von der Niedergeschwindigkeit-Verbindung über die zweite Niedergeschwindigkeit-Schnittstelle.

11. IC nach Anspruch 8, wobei das erste Signal einen Lesebefehl aufweist.

12. IC nach Anspruch 8, wobei das erste Signal einen Schreibbefehl aufweist.

13. IC nach Anspruch 8, wobei die Steuerschaltung konfiguriert ist zum Senden eines Dehnbefehls über die erste Niedergeschwindigkeit-Schnittstelle für das Veranlassen des Slaves zum Eintreten in eine Dehnung für eine Unterstützung von Verzögerungen.

14. IC nach einem der Ansprüche 1-7 oder 8-13, der in einem Gerät integriert ist, das aus der Gruppe ausgewählt ist, die aus einer Set-Top-Box, einer Unterhaltungseinheit; einem Navigationsgerät, einem Kommunikationsgerät, einer fix positionierten Dateneinheit, einer mobilen Dateneinheit, einem GPS (Global Positioning System)-Gerät, einem Mobiltelefon, einem Zellulartelefon, einem Smartphone, einem SIP (Session Initiation Protocol)-Telefon, einem Tablet, einem Phablet, einem Server, einem Computer, einem tragbaren Computer, einem mobilen Rechengerät, einem tragbaren Rechengerät, einem Desktop-Computer, einem PDA (Personal Digital Assistant), einem Monitor, einem Computermonitor, einem Fernsehgerät, einem Tuner, einem Radio, einem Satellitenradio, einem Musikwiedergabegerät, einem digitalen Musikwiedergabegerät, einem tragbaren Musikwiedergabegerät, einem digitalen Videowiedergabegerät, einem Videowiedergabegerät, einem DVD-Wiedergabegerät, einem tragbaren digitalen Videowiedergabegerät, einem Automobil, einer Fahrzeugkomponente, einem Avioniksystem, einer Drohne und einem Multicopter besteht.

15. Ein Verfahren zum Kommunizieren für ein Tunneln von 12C-Transaktionen zwischen einem Master (504) und mehreren Slaves (512), aufweisend:
Empfangen eines ersten Signals von einer ersten Niedergeschwindigkeit-Schnittstelle von dem Master (504), wobei die erste Niedergeschwindigkeit-Schnittstelle eine 12C-Schnittstelle ist,
Verwenden einer Übersetzungsschaltung für das Generieren eines Befehls mit einer darin eingebetteten Adresse, wobei die Übersetzungsschaltung eine Slave-Adresse-Nachschlagetabelle (Slave Address Table Lookup bzw. SATL)-Schaltung aufweist, wobei die Adresse eine unter Verwendung der SATL übersetzte Adresse eines Slaves (512) ist, und
Senden des Befehls über eine zweite Niedergeschwindigkeit-Schnittstelle über einen Mehrkanalbus an einen fernen integrierten Schaltkreis (IC), wobei der ferne IC den Slave (512) aufweist, wobei die zweite Niedergeschwindigkeit-Schnittstelle mit einer Seitenbandverbindung in dem Mehrkanalbus gekoppelt ist, wobei die Seitenbandverbindung Seitenbandverwendung (Sideband Use bzw. SBU)-Stifte eines USB (Universal Serial Bus)-Standards aufweist,
wobei die zweite Niedergeschwindigkeit-Schnittstelle eine Seitenbandschnittstelle in einer USB-Schnittstelle ist.

## Revendications

1. Circuit intégré, IC, (402, 600) destiné à des transactions par tunnel I2C entre un maître (504) et des esclaves (512), l'IC comprenant :
une première interface à faible débit (636) configurée pour être reliée à une liaison à faible débit (604), dans lequel la première interface à faible débit comprend une interface I2C ;
un circuit de traduction (638) associé à la première interface à faible débit, le circuit de traduction comprenant un circuit de recherche de table d'adresse esclave, SATL ;
une deuxième interface à faible débit (418, 642) configurée pour être reliée à une liaison à bande latérale dans un bus multicanal (406), la liaison à bande latérale comprenant des broches d'utilisation de bande latérale, SBU, d'une norme de bus série universel, USB, dans lequel la deuxième interface à faible débit comprend une interface à bande latérale dans une interface USB ; et
un circuit de commande (410) configuré pour :
recevoir un premier signal en provenance de la première interface à faible débit depuis le maître (504) ;
utiliser le circuit de traduction pour générer une commande dans lequel est incorporée une adresse, dans lequel l'adresse est une adresse d'un esclave (512) traduite en utilisant la SATL ; et
envoyer la commande au moyen de la deuxième interface à faible débit sur le bus multicanal à un IC distant, l'IC distant comprenant l'esclave (512).

2. IC selon la revendication 1, comprenant en outre une interface de bus comprenant la deuxième interface à faible débit et au moins une interface parmi une interface à très grand débit, une interface à plein débit et une interface à grand débit.

3. IC selon la revendication 1, dans lequel le circuit de commande est configuré en outre pour recevoir un deuxième signal provenant de la liaison à faible débit au moyen de la deuxième interface à faible débit, dans lequel le circuit de commande est configuré en outre pour extraire une deuxième adresse du deuxième signal et pour envoyer un troisième signal à un deuxième IC distant au moyen de la première interface basse débit en utilisant la deuxième adresse.

4. IC selon la revendication 1, dans lequel le premier signal comprend une commande de lecture.

5. IC selon la revendication 1, dans lequel le premier signal comprend une commande d'écriture.

6. IC selon la revendication 1, dans lequel le circuit de commande est configuré pour envoyer une commande d'étirement au moyen de la première interface à faible débit pour amener l'esclave à entrer un étirement pour accueillir des retards.

7. IC selon la revendication 1, dans lequel la deuxième interface à faible débit comprend au moins une partie d'un connecteur USB de type C.

8. Circuit intégré, IC, (404, 700) destiné à des transactions par tunnel I2C entre un maître (504) et des esclaves (512), l'IC comprenant :
une première interface à faible débit (734) configurée pour être reliée à une liaison à faible débit (736), dans lequel la première interface à faible débit comprend une interface I2C ;
un circuit de traduction (774) associé à la première interface à faible débit, le circuit de traduction comprenant un circuit de recherche de table d'adresse esclave, SATL, (774) ;
une deuxième interface à faible débit (422, 708) configurée pour être reliée à une liaison à bande latérale dans un bus multicanal (406), la liaison à bande latérale comprenant des broches d'utilisation de bande latérale, SBU, d'une norme de bus série universel, USB, dans lequel la deuxième interface à faible débit comprend une interface à bande latérale dans une interface USB ; et
un circuit de commande (414) configuré pour :
recevoir un premier signal comprenant une commande et une adresse en provenance de la deuxième interface à faible débit,
utiliser la SATL (774) pour déterminer si la commande doit être placée sur une liaison descendante (776) ou transmise à la première interface à faible débit (778) ; et
envoyer la commande au moyen de la première interface à faible débit à un IC distant, l'IC distant comprenant l'esclave (512).

9. IC selon la revendication 8, comprenant en outre une interface de bus comprenant la deuxième interface à faible débit et au moins une interface parmi une interface à très grand débit, une interface à plein débit et une interface à grand débit.

10. IC selon la revendication 8, dans lequel le circuit de commande est configuré en outre pour recevoir un deuxième signal provenant de la liaison à faible débit au moyen de la deuxième interface à faible débit.

11. IC selon la revendication 8, dans lequel le premier signal comprend une commande de lecture.

12. IC selon la revendication 8, dans lequel le premier signal comprend une commande d'écriture.

13. IC selon la revendication 8, dans lequel le circuit de commande est configuré pour envoyer une commande d'étirement au moyen de la première interface à faible débit pour amener l'esclave à entrer un étirement pour accueillir des retards.

14. IC selon l'une quelconque des revendications 1 à 7 ou 8 à 13, intégré dans un dispositif sélectionné dans le groupe constitué de : un décodeur ; une unité de divertissement ; un dispositif de navigation ; un dispositif de communication ; une unité de données de localisation fixe ; une unité de données de localisation mobile ; un dispositif de système de positionnement global, GPS ; un téléphone mobile ; un téléphone cellulaire ; un téléphone intelligent ; un téléphone à protocole de déclenchement de session, SIP ; une tablette ; une phablette ; un serveur ; un ordinateur ; un ordinateur portable ; un dispositif informatique mobile ; un dispositif informatique portable ; un ordinateur de bureau ; un assistant numérique personnel, PDA ; un moniteur ; un écran d'ordinateur ; une télévision ; un syntoniseur ; une radio ; une radio par satellite ; un lecteur de musique ; un lecteur de musique numérique ; un lecteur de musique portable ; un lecteur vidéo numérique ; un lecteur vidéo ; un lecteur de disque vidéo numérique, DVD ; un lecteur vidéo numérique portable ; une automobile ; un composant de véhicule ; des systèmes avioniques ; un drone ; et un multicoptère.

15. Procédé de communication destiné à des transactions par tunnel I2C entre un maître (504) et des esclaves (512), comprenant :
la réception d'un premier signal provenant d'une première interface à faible débit depuis le maître (504), dans lequel la première interface à faible débit comprend une interface I2C ;
l'utilisation d'un circuit de traduction pour générer une commande dans lequel est incorporée une adresse, le circuit de traduction comprenant un circuit de recherche de table d'adresse esclave, SATL, dans lequel l'adresse est une adresse d'un esclave (512) traduite en utilisant la SATL ; et
l'envoi de la commande au moyen d'une deuxième interface à faible débit sur un bus multicanal à un circuit intégré, IC, distant, l'IC distant comprenant l'esclave (512),
dans lequel la deuxième interface à faible débit est reliée à une liaison à bande latérale dans le bus multicanal, la liaison à bande latérale comprenant des broches d'utilisation de bande latérale, SBU, d'une norme de bus série universel, USB ;
dans lequel la deuxième interface à faible débit comprend une interface à bande latérale dans une interface de bus série universel, USB.
